# EUROPEAN PATENT SPECIFICATION

(11) **EP 3 640 803 B1**
(45) Date of publication and mention of the grant of the patent: **11.05.2022**
(21) Application number: 18909265.3
(22) Date of filing: 26.09.2018
(51) Int. Cl.: G06F 11/30

(54) **HOST MONITORING METHOD AND DEVICE**
VERFAHREN UND VORRICHTUNG ZUR HOST ÜBERWACHUNG
PROCÉDÉ ET DISPOSITIF DE SURVEILLANCE D'HÔTE

(30) Priority: 15.08.2018 CN 201810930501
(43) Date of publication of application: 22.04.2020
(73) Proprietor: Wangsu Science & Technology Co., Ltd., Shanghai 200030 (CN)
(72) Inventor: LI, Qingrong, 200030 Xuhui District Shanghai (CN); FU, Chen, 200030 Xuhui District Shanghai (CN)
(74) Representative: de Arpe Fernandez, Manuel
(86) International application number: PCT/CN2018/107478
(87) International publication number: WO 2020/034309

(56) References cited:
- CN-A- 103 186 367
- CN-A- 103 942 132
- CN-A- 105 975 375
- CN-A- 108 182 130
- CN-B- 103 001 824
- US-A1- 2012 297 059
- US-A1- 2016 170 861
- Anonymous: "How to Batch Add Host by Using Cacti Script", CSDN , 3 June 2010 (2010-06-03), pages 1-8, XP055659029, Retrieved from the Internet: URL:https://blog.csdn.net/rj03hou/article/ details/5644441

## Description

### FIELD OF DISCLOSURE

The present disclosure generally relates to the field of Internet technology and, more particularly, relates to a method and device for monitoring host computers.

### BACKGROUND

Currently, a Cacti system may be used to monitor the load and traffic of each host computer in a CDN (Content Delivery Network). The Cacti system may map the load and traffic data of each port in each host computer into a port graph, to allow an administrator to easily monitor real-time data of a host computer.

In the existing technologies, when an administrator uses the Cacti system, the administrator usually needs to manually add a host computer to the system, add a host computer to a node tree, configure the port graphs for the host computers, name the host computers and the port graphs, and combine the port graphs, etc., in the system. The way of manually creating port graphs for each host computer clearly is not able to meet the needs for an increasing number of host computers. Therefore, there is a need for a more efficient method for monitoring host computers.

CN 108 182 130 A discloses a cloud application container automation monitoring method based on a template. Abstract description is conducted on monitored objects in a container environment, collected measure indexes and collected monitoring data, and a model is provided for monitoring data collection and processing. A monitoring data collector and a container self-discovery component running in a physical machine can automatically send monitoring data of a container to a monitoring data persistence module and an anomaly detection module. Basic information of the container can be automatically obtained, the software environment of the container is detected, the corresponding monitoring template is configured, and thus monitoring can be implemented automatically when a container instance is generated.

US 2012/0297059 A1 discloses a software-implemented method for rapid and automated creation of monitoring configurations for server instances in a cloud computing infrastructure. The method maintains a plurality of monitoring configuration templates which can be used to rapidly create monitoring configurations. When a matching monitoring configuration template is not found, the new monitoring configuration template is created manually or automatically. Automatically creating the new monitoring configuration template includes polling and analyzing ports of the new server instance by communicating with the instance via a standard management protocol.

### BRIEF SUMMARY OF THE DISCLOSURE

The objective of the present disclosure is to provide a method and device for monitoring host computers, which may improve monitoring efficiency.

To achieve the above objective, as defined in claim 1, the invention provides a method for monitoring host computers computers, comprising: providing a preset script that, when executed, implements the following steps including: acquiring node information of a target node and host computer information of a target host computer in the target node, wherein the host computer information includes brand/model and to-be-monitored port; identifying a matching host computer template from a pre-loaded plurality of host computer templates based on the brand/model of the target host computer; calling a host computer template that matches the target host computer, and creating an instance of the target host computer in a monitoring system according to the host computer information and the host computer template, adding the created instance to a node tree corresponding to the node information, wherein the node tree displays the monitored status of each host computer; if the node tree corresponding to the node information does not exist, identifying a network operator information and a geographical location information included in the node information, calling the script for creating the node tree and executing the called script in accordance with the node information to create the node tree corresponding to the node information, determining a to-be-monitored port of the created instance in the node tree based on the host computer information, calling a graph template that matches the port, and creating a port graph corresponding to the port for the created instance, and collecting real-time data of the port and drawing the collected real-time data into the port graph.

To achieve the above objective, as defined in claim 10, the present disclosure further provides a device for monitoring host computers, where the device includes a system for monitoring host computers, and the system is configured to implement the foregoing method.

To achieve the above objective, as defined in claim 11, the present disclosure further provides a device for monitoring host computers. The device includes a memory and a processor, where the memory is used to store a preset script that, when executed by the processor, implement the foregoing method.

As can be seen from the above, in the technical solutions provided by the present disclosure, each step involved in the process of monitoring host computers is be written into a preset script. The preset script, when executed, may then implement the process of monitoring a host computer. Specifically, when the preset script is executed, the Cacti system may obtain the node information of a target node and the host computer information of a target host computer in the target node by accessing a resource server in the CDN. An instance of the target host computer may be then created through matching a template corresponding to the host computer. After the instance of the target host computer is created, the created instance may be added to a node tree corresponding to the target host computer. In order to monitor the status of each port of the target host computer by way of a graph, to-be-monitored ports for the created instance may be determined, and a port graph may be created for each port by calling a graph template that matches the port. The port graph may be configured to receive real-time data of the port, and display the collected real-time data by way of a graph, to allow an administrator to monitor the target host computer. As can be seen from the above, through an approach of prewriting each step to the preset script, the port graphs is be created automatically and in batch for a large number of host computers, which solves the problem of inefficiency caused by human manipulation while also avoiding errors caused by human manipulation.

### BRIEF DESCRIPTION OF THE DRAWINGS

To make the technical solutions in the embodiments of the present disclosure clearer, a brief introduction of the accompanying drawings consistent with descriptions of the embodiments will be provided hereinafter. It is to be understood that the following described drawings are merely some embodiments of the present disclosure. Based on the accompanying drawings and without creative efforts, persons of ordinary skill in the art may derive other drawings.
FIG. 1 is a flowchart of a method for monitoring host computers according to some embodiments of the present disclosure;
FIG. 2 is a processing flow of a method for monitoring host computers according to some embodiments of the present disclosure; and

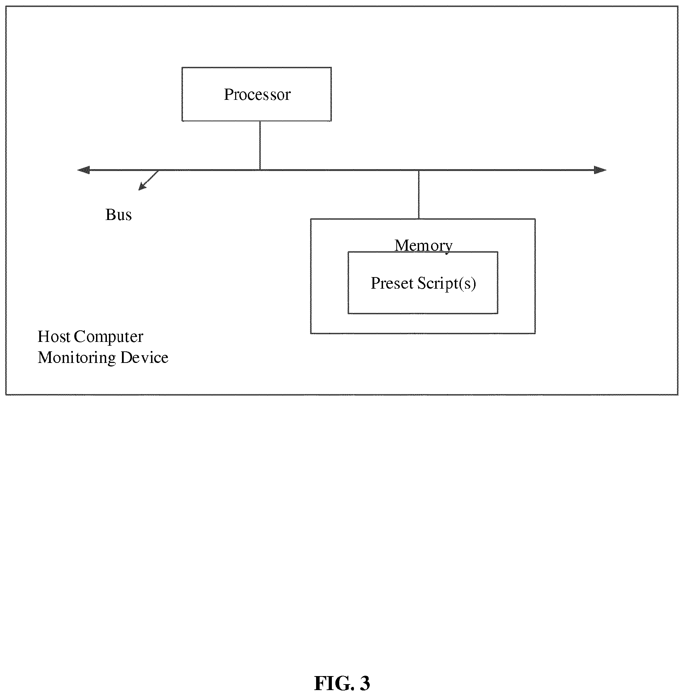

FIG. 3 is a schematic structural diagram of a device for monitoring host computers according to some embodiments of the present disclosure.

### DETAILED DESCRIPTION

To make the objective, technical solutions, and advantages of the present disclosure clearer, the implementations of the present disclosure will be made in detail hereinafter with reference to the accompanying drawings.

The present disclosure provides a method for monitoring host computers. Each processing step involved in the method is be programmed into a preset script. Accordingly, by executing the preset script, each step of the method may be automatically implemented. The preset script is programmed using a specified programming language in accordance with the actual needs. For example, the preset script may be a shell script, and may be programmed by using a SQL language, a PHP language, a Perl language, etc. Accordingly, the programmed preset script may be recognized by a Cacti system, to allow each step in the method to be implemented properly.

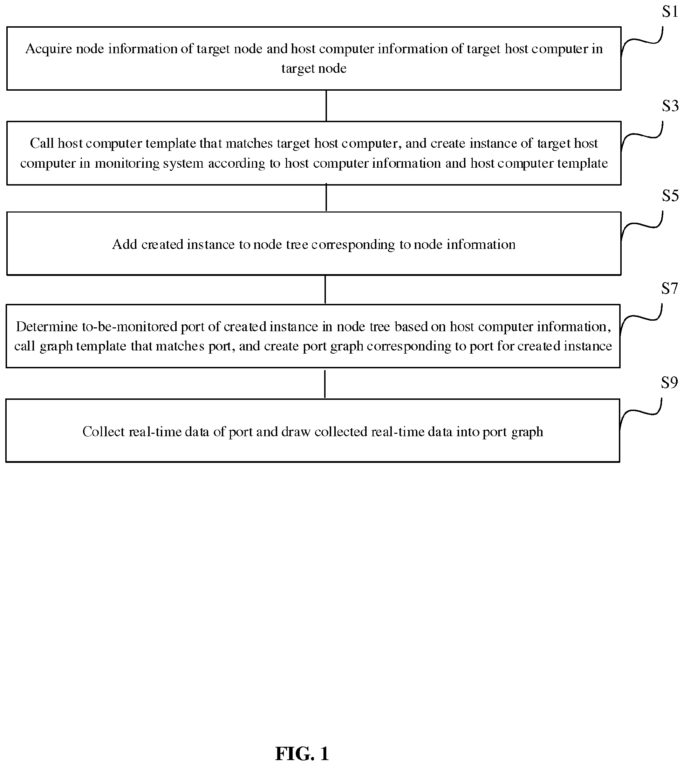

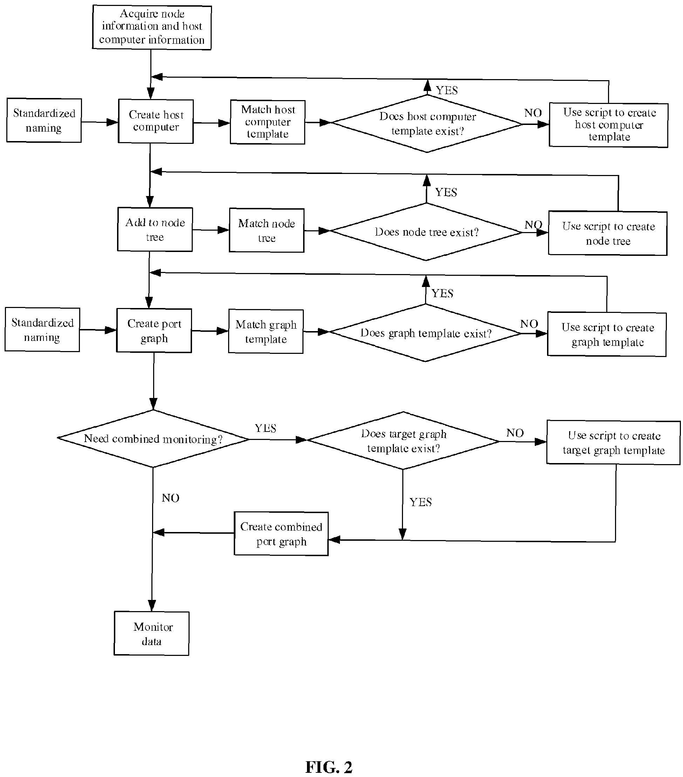

Specifically, referring to FIG. 1 and FIG. 2, a method for monitoring host computers provided by the present disclosure may include the following steps.

S1: Acquire node information of a target node and host computer information of a target host computer in the target node.

In the disclosed implementation, the target node may be a node that is to be monitored. The target node may include a plurality of host computers. In real applications, each host computer in the target node may be monitored. Apparently, according to the needs of users, there may be just some of the host computers in the target node to be monitored. A monitored host computer may be the foregoing target host computer.

In the disclosed implementation, the node information of the target node and the host computer information of the target host computer may be stored in a resource server of the CDN. In the resource server, a Cacti server in which the Cacti system resides may be added to the whitelist in advance, so that information acquisition permission may be issued to the Cacti server. In this way, by accessing the resource server, the Cacti server may acquire the corresponding node information and host computer information.

In the disclosed implementation, the node information may include information such as the name of the target node, guaranteed bandwidth, capped bandwidth, network operator, region where the node is located, and state/province where the node is located, etc. The host computer information includes information such as the IP address of the target host computer, SNMP version number, SNMP community string, SNMPV3 user name and password, SNMPV3 authentication encryption protocol, brand/model, and to-be-monitored port(s), etc. Apparently, in real applications, the node information and the host computer information may include more or less information, which is not specifically limited in the present disclosure.

S3: Call a host computer template that matches the target host computer, and create an instance of the target host computer in a monitoring system according to the host computer information and the host computer template.

In the disclosed implementation, an instance of the host computer may be created in the Cacti system by using a host computer template. The host computer template is configured to specify which port(s) of the host computer should be monitored. The host computer template corresponds to the brand/model of the host computer. Generally, host computers with a same brand/model may have similar host computer templates. In the Cacti system, a plurality of different host computer templates may be pre-loaded. Next, when an instance of the target host computer is being created, the included brand/model may be identified from the host computer information. Based on the brand/model of the target host computer, a matching host computer template may be then identified from the pre-loaded plurality of host computer templates. After the matching host computer template is identified, the host computer template may be called and an instance of the target host computer is created in the Cacti system.

In one implementation, when creating the instance of the target host computer, it is also necessary to name the created instance. In order to make the name of the created instance to have a consistent format, in the disclosed implementation, based on the node information and the host computer information, the host computer name of the created instance may be determined according to a specified naming convention. Specifically, information such as the node name, guaranteed bandwidth, capped bandwidth, network operator, region where the node is located, and province/state where the node is located may be identified from the node information, so that a prefix like "Fujian Xiamen China Netcom [0G/140G]" may be generated. Here, "Fujian" represents the province where the target node is located, "Xiamen" represents the region where the target node is located, "China Netcom" represents the network operator corresponding to the target node, "0G" represents the guaranteed bandwidth, and "140G" represents the capped bandwidth. Next, according to the host computer information, a suffix like "hostA_IP" may be generated, where "hostA" represents the original name of the target host computer, and "IP" represents the IP address of the target host computer. Then, by combining the generated prefix and suffix together, a standardized name of the target host computer may be obtained. As can be seen, the host computer name determined for the target host computer includes at least the region information of the target node, the network operator information, the bandwidth information, and the communication address information of the target host computer.

In one implementation, for a host computer of a certain brand/model, a corresponding host computer template may not be available in the Cacti system. Under this situation, the method further provides a script for creating a host computer template. When no host computer template matching the target host computer can be identified, the script for creating a host computer template is called. Next, from the host computer information of the target host computer, the included model of the host computer is identified. At the same time, the to-be-monitored port(s) of the target host computer is also identified. Accordingly, when the script for creating a host computer template is executed in accordance with the model of the host computer, a matching host computer template is created. In the created host computer template, which port(s) of the target host computer to be monitored are also marked.

S5: Add the created instance to a node tree corresponding to the node information.

In the disclosed implementation, the Cacti system usually displays the monitored status of each host computer to an administrator by way of a node tree. Accordingly, after the instance of the target host computer is created, the created instance is added to a node tree corresponding to the node information. Specifically, node trees may be classified according to different network operators and geographic locations. For example, the south region of China Telecom and south region of China Netcom may correspond to different node trees. Accordingly, the network operator and geographic location corresponding to the target host computer may be identified, and the created instance may be added to a node tree that matches the identified network operator and geographic location.

In one implementation, the node tree that corresponds to the target host computer may have not been previously created in the Cacti system. In light of this, the method provides a script for creating a node tree. In this way, if the node tree corresponding to the node information does not exist at this moment, the network operator information and the geographical location information included in the node information is identified. The script for creating a node tree is then then called, and executed in accordance with the node information, so that a node tree corresponding to the node information is created. Once the node tree is created, the created instance is then added to the node tree.

S7: Determine a to-be-monitored port(s) for the created instance in the node tree based on the host computer information, and call a graph template(s) that matches the to-be-monitored port(s), and create a port graph(s) corresponding to the to-be-monitored port(s) for the created instance.

In the disclosed implementation, after the instance of the target host computer is created and added to the corresponding node tree, based on the to-be-monitored ports of the target host computer, port graphs corresponding to the to-be-monitored ports may be created. Specifically, from the acquired host computer information, the ports of the target host computer that are to be monitored may be identified. Next, for different ports, different graph templates may be called to create corresponding port graphs. The created port graphs may include, for example, a traffic statistical graph, a packet loss rate statistical graph, a CPU usage statistical graph, a memory usage statistical graph, and the like.

In one implementation, considering that not all graph templates are preloaded in the Cacti system, a script for creating graph templates is then provided. In this way, when there is no graph template that matches a to-be-monitored port, the port type of the port is identified and the script for creating graph templates is called. The called script is be executed in accordance with the port type, to create a graph template that matches the port. Once the graph template is created, a port graph for the corresponding port is then created.

In one implementation, in order to ensure that the created port graphs have a consistent name format, the name of each port graph may be determined according to a certain naming convention. Specifically, different naming conventions may be used for different ports. Accordingly, following a naming convention that matches the type of a current port, a graph name may be then determined for a port graph created for the current port. For example, a graph name may be expressed in terms of "host computer name + port description field + port name". Assuming that the current port is a traffic collection port, the graph name determined for the port may be then "Fujian Xiamen China Netcom Download [0G/140G] 36.250.73.1-UPLink_WT-10GE1/0/1", where "Fujian Xiamen China Netcom Download [0G/ 140G]36.250.73.1" may be the host computer name, "UPLink WT" may be the port description field, and "10GE1/0/1" may be the port name.

S9: Collect real-time data of the port(s) and draw the collected real-time data into the port graph(s).

In the disclosed implementation, after a port graph is created for each port, the port graph may have an abscissa axis and an ordinate axis based on the format specified in the graph template. The units of the two coordinate axes may be also specified based on the graph template. When a port is in normal operation, real-time data may be generated. At this moment, the Cacti system may collect the real-time data for the port, and draw the collected real-time data into the port graph, to allow the real-time situation of the port to be directly displayed to an administrator, thereby facilitating the monitoring of the port by the administrator.

In one implementation, due to the service requirements, in certain circumstances, a plurality of ports from different host computers may need to be combined for monitoring. For example, host computer A includes port 1 to port 3, and host computer B includes port 4 and port 5. Port 1 and port 4 are both traffic ports. When a service party indicates that the traffic ports for host computer A and host computer B should be combined for monitoring, these two traffic ports will be considered as two to-be-combined ports.

In the disclosed implementation, at least two to-be-combined target ports may be determined from a plurality of to-be-monitored ports. Here, the plurality of to-be-monitored ports may belong to different host computers. After the to-be-combined target ports have been determined, it may be determined whether there currently exists a target graph template that matches the at least two to-be-combined target ports. If the target graph template exists, the template may be used to create a port graph corresponding to the at least two to-be-combined target ports. If the target graph template does not exist, the aforementioned script for creating graph templates is called. Based on the number of ports and the port types of the at least two to-be-combined target ports, a matching target graph template is created by using the called script. In the target graph template, the number of ports of the currently combined target ports may be marked, and the port types corresponding to the combined target ports may be also marked. In real applications, the host computers from which these target ports come may be marked as well.

Accordingly, after the corresponding port graph is created based on the target graph template, the real-time data of each of the at least two target ports may be respectively collected. The collected real-time data of the respective target ports are pooled together and drawn to the port graph created based on the target graph template, to allow combined monitoring of the multiple target ports. In addition, after creating a combined port graph, the graph name for the created port graph may be determined based on a preset naming convention. The naming convention may specify various fields to-be-included in the graph name. For example, the graph name may include a field indicating the port type(s), a field indicating the number of ports, a field indicating the names of the host computers included in the combination, etc.

In the present disclosure, the above-described preset script(s) may be executed in a specified time cycle. The specified time cycle may be, for example, one day. Accordingly, the Cacti system may start to monitor the updated nodes or host computers in the CDN at a fixed time each day. In addition, the preset script(s) may be also executed when a triggering instruction is received. The triggering instruction may be issued by an administrator in the Cacti system. If there is more than one host computer, the preset script(s) may create port graphs and monitor the data for these host computers in batch, which greatly improves the efficiency for monitoring host computers.

The present disclosure further provides a device for monitoring host computers. The device includes a system for monitoring host computers. The system is configured to implement the above-described methods for monitoring host computers.

Referring to FIG. 2, the present disclosure further provides a device for monitoring host computers. The device includes a memory and a processor, where the memory is used to store a preset script(s) that, when executed by the processor, implement the above-described methods.

As can be seen from the above, in the technical solutions provided by the present disclosure, each step involved in the process of monitoring host computers may be written into a preset script. The preset script, when executed, may then implement the process of monitoring a host computer. Specifically, when the preset script is executed, the Cacti system may obtain the node information of a target node and the host computer information of a target host computer in the target node by accessing a resource server in the CDN. An instance of the target host computer may be then created through matching a template corresponding to the host computer. After the instance of the target host computer is created, the created instance may be added to a node tree corresponding to the target host computer. In order to monitor the status of each port of the target host computer by way of a graph, to-be-monitored ports for the created instance may be determined, and a port graph may be created for each port by calling a graph template that matches the port. The port graph may be configured to receive real-time data of the port, and display the collected real-time data by way of a graph, to allow an administrator to monitor the target host computer. As can be seen from the above, through an approach of prewriting each step to the preset script, the port graphs may be created automatically and in batch for a large number of host computers, which solves the problem of inefficiency caused by human manipulation while also avoiding errors caused by human manipulation.

Through the description of the above embodiments, those skilled in the art may clearly understand that the various embodiments may be implemented by means of software plus a necessary general hardware platform, and of course, may also be implemented by hardware. Based on such understanding, the above-described technical solutions may be embodied in the form of software products in essence or in the form of software products, which may be stored in a computer-readable storage medium such as ROM/RAM, magnetic discs, optical discs, etc., and include a series of instructions for causing a computer device (which may be a personal computer, server, or network device, etc.) to perform the methods described in various embodiments or portions of the embodiments.

Although the present disclosure has been described as above with reference to preferred embodiments, these embodiments are not constructed as limiting the present disclosure. Any modifications, equivalent replacements, and improvements made without departing from the principle of the present disclosure shall fall within the scope of the protection of the present disclosure as defined by the appended claims.

## Claims

1. A method for monitoring host computers, comprising: providing a preset script that, when executed, implements the following steps including:
acquiring node information of a target node and host computer information of a target host computer in the target node, wherein the host computer information includes brand/model and to-be-monitored port;
identifying a matching host computer template from a pre-loaded plurality of host computer templates based on the brand/model of the target host computer;
calling a host computer template that matches the target host computer, and creating an instance of the target host computer in a monitoring system according to the host computer information and the host computer template,
adding the created instance to a node tree corresponding to the node information, wherein the node tree displays the monitored status of each host computer;
if the node tree corresponding to the node information does not exist, identifying a network operator information and a geographical location information included in the node information, calling the script for creating the node tree and executing the called script in accordance with the node information to create the node tree corresponding to the node information
determining a to-be-monitored port of the created instance in the node tree based on the host computer information, calling a graph template that matches the port, and creating a port graph corresponding to the port for the created instance, and
collecting real-time data of the port and drawing the collected real-time data into the port graph.

2. The method according to claim 1, wherein creating the instance of the target host computer further includes:
determining a host computer name for the created instance based on the node information and the host computer information by using a specified naming convention, wherein the host computer name includes at least region information of the target node, network operator information, bandwidth information, and communication address information of the target host computer.

3. The method according to claim 1, further comprising:
providing a script for creating a host computer template, wherein, if currently there is no host computer template that matches the target host computer, the method further includes:
identifying a host computer model and a to-be-monitored port included in the host computer information, and calling the script for creating a host computer template, and
executing the called script in accordance with the host computer model, and creating the host computer template that matches the target host computer and marking a port of the target host computer to be monitored in the created host computer template.

4. The method according to claim 1, wherein adding the created instance to the node tree corresponding to the node information further includes:
identifying a network operator and a geographic location corresponding to the target host computer, and adding the created instance to a node tree that matches the identified network operator and geographic location.

5. The method according to claim 1, wherein, when creating the port graph corresponding to the port for the created instance further includes:
determining a graph name for the created port graph using a naming convention that matches a type of the port.

6. The method according to claim 1, further comprising:
providing a script for creating a graph template, wherein, if currently there is no graph template that matches the port, the method further includes:
identifying a port type of the port and calling the script for creating a graph template, and
executing the called script in accordance with the port type, and creating the graph template that matches the port.

7. The method according to claim 1, wherein, after creating the port graph corresponding to the port for the created instance, the method includes:
determining at least two to-be-combined target ports from a plurality of to-be-monitored ports, and determining whether currently there is a target graph template that matches the at least two to-be-combined target ports;
if currently there is a target graph template that matches the at least two to-be-combined target ports, using the target graph template to create a port graph corresponding to the at least two to-be-combined target ports; and
if currently there is no target graph template that matches the at least two to-be-combined target ports, calling a script for creating a graph template, and using the called script to create a matching target graph template based on a number of ports and port types of the at least two to-be-combined target ports.

8. The method according to claim 7, further comprising:
respectively collecting real-time data for each of the at least two to-be-combined target ports, and pooling together the collected real-time data of each target port and drawing the pooled data into a port graph created based on the target graph template.

9. The method according to claim 1, wherein the preset script is executed according to a specified time cycle, or the preset script is executed when a triggering instruction is received.

10. A device for monitoring host computers, comprising a monitoring system for the host computer, wherein the monitoring system is configured to implement the method according to any one of claims 1 to 9.

11. A device for monitoring host computers, comprising a memory and a processor, wherein the memory stores a preset script that, when executed by the processor, implements the method according to any one of claims 1 to 9.

## Patentansprüche

1. Eine Methode für die Kontrolle von Host-Rechnern, die Folgendes umfasst:
Bereitstellung eines voreingegebenen Skripts, dass bei Ausführung folgende Schritte implementiert einschliesslich Erhalt von Knoteninformation eines Zielknotens und Host-Rechnerinformation eines Ziel-Host-Rechners im Zielknoten, wobei die Host-Rechnerinformation die Marke/das Modell und den zu kontrollierenden Port einschliesst;
Identifizierung einer entsprechenden Host-Rechnervorlage aus einer vorher geladenen Mehrzahl von Host-Rechnervorlagen basierend auf Marke/Modell des Ziel-Host-Rechners;
Aufrufen einer Host-Rechnervorlage, die mit dem Ziel-Host-Rechner übereinstimmt, und Anlegen einer Instanz des Ziel-Host-Rechners in einem Kontrollsystem übereinstimmend mit der Host-Rechnerinformation und der Host-Rechnervorlage,
Hinzufügen der angelegten Instanz zu einer Knotenbaumstruktur entsprechend der Knoteninformation, wobei die Knotenbaumstruktur den kontrollierten Stand eines jeden Host-Rechners anzeigt;
wenn die der Knoteninformation entsprechende Knotenbaumstruktur nicht vorhanden ist, Identifizierung einer Information des Netzwerkbetreibers und einer Information des geogeografischen Standortes, die in der Knoteninformation eingeschlossen sind, Aufrufen des Skripts zum Anlegen der Knotenbaumstruktur und Ausführen des aufgerufenen Skripts übereinstimmend mit der Knoteninformation, um die der Knoteninformation entsprechende Knotenbaumstruktur anzulegen;
Bestimmung eines zu kontrollierender Ports der angelegenden Instanz in der Knotenbaumstruktur basierend auf der Host-Rechnerinformation, Aufrufen einer grafischen, dem Port entsprechenden Vorlage und Anlegen einer Portgrafik, die dem Port für den angelegten Datenbankinhalt entspricht, und
Sammeln von Echtzeitdaten des Ports und Einfügen der gesammelten Echtzeitdaten in die Portgrafik.

2. Die Methode gemäss Anspruch 1, bei der das Anlegen einer Instanz des Ziel-Host-Rechners weiter Folgendes einschliesst:
Bestimmung eines Host-Rechnersnamens für die angelegte Instanz basierend auf der Knoteninformation und der Host-Rechnerinformation mittels einer spezifizierten Namenskonvention, wobei der Host-Rechnername mindestens eine Bereichsinformation des Zielknotens, Information des Netzwerkbetreibers, Bandbreiteninformation und Information der Kommunikationsadresse des Ziel-Host-Rechners einschliesst.

3. Die Methode gemäss Anspruch 1, die weiter Folgendes umfasst:
Bereitstellung eines Skripts für das Anlegen einer Host-Rechnervorlage, wobei, wenn gegenwärtig keine Host-Rechnervorlage vorhanden ist, die dem Ziel-Host-Rechner entspricht, die Methode weiter Folgendes einschliesst:
Identifizierung eines Host-Rechnermodells und eine zu kontrollierenden Ports, der in der Host-Rechnerinformation eingeschlossen ist, und Aufrufen des Skripts für das Anlegen einer Host-Rechnervorlage, und
Ausführen des aufgerufenen Skripts übereinstimmend mit dem Host-Rechnermodell, und Anlegen der dem Ziel-Host-Rechner entsprechenden Host-Rechnervorlage und Kennzeichnung eines Ports des in der angelegten Host-Rechnervorlage kontrollierten Ziel-Host-Rechners.

4. Die Methode gemäss Anspruch 1, bei der das Hinzufügen der angelegten Instanz zu der der Knoteninformation entsprechenden Knotenbaumstruktur weiter Folgendes einschliesst:
Identifizierung eines Netzwerkbetreibers und eines geografischen, dem Ziel-Host-Rechners entsprechenden Standorts und Hinzufügen der angelegten Instanz zu einer Knotenbaumstruktur, die zum identifizierten Netzwerkbetreiber und dem geogeografischen Standort gehört.

5. Die Methode gemäss Anspruch 1, bei der, wenn die Portgeografik angelegt wird, die dem Port für die angelegte Instanz entspricht, weiter Folgendes eingeschlossen ist:
Bestimmung eines Geografiknamens für die angelegte Portgeografik unter Benutzung einer Namenskonvention, die zum Porttyp passt.

6. Die Methode gemäss Anspruch 1, die Folgendes umfasst:
Bereitstellung eines Skripts für das Anlegen einer Geografikvorlage, wobei, wenn augenblicklich keine Geografikvorlage vorhanden ist, die dem Port entspricht, die Methode weiter Folgendes einschliesst:
Identifizierung eines Porttyps des Ports und Aufrufen des Skripts für das Anlegen einer Grafikvorlage und Ausführen des aufgerufenen Skripts übereinstimmend mit dem Porttyp und Anlegen der dem Port entsprechenden Grafikvorlage.

7. Die Methode gemäss Anspruch 1, wobei nach Anlegen der dem Port für die angelegte Instanz entsprechenden Portgrafik die Methode weiter Folgendes einschliesst:
Bestimmung von mindestens zwei zu kombinierenden Zielports aus einer Mehrzahl von zu kontrollierenden Ports und Bestimmung, ob augenblicklich eine Zielgrafikvorlage vorhanden ist, die zu den mindestens zwei zu kombinierenden Zielports passt;
wenn augenblicklich eine Zielgrafikvorlage vorhanden ist, die zu den mindestens zwei, zu kombinierenden Zielports passt, Benutzung der Zielgrafikvorlage zwecks Anlegen einer mindestens den zwei zu kombinierenden Zielports entsprechenden Portgrafik; und
wenn augenblicklich keine Zielgrafikvorlage vorhanden ist, die zu den mindestens zwei zu kombinierenden Zielports passt, Aufrufen eines Skripts zwecks Anlegen einer Grafikvorlage und Benutzung des aufgerufenen Skripts zwecks Anlegen einer passenden Zielgrafikvorlage basierend auf einer Anzahl von Ports und Porttypen von den mindestens zwei zu kombinierenden Zielports.

8. Die Methode gemäss Anspruch 7, die weiter Folgendes umfasst:
Jeweils Sammeln von Istzeitdaten für jeden der mindestens zwei zu kombinierenden Zielports, und Bündelung der gesammelten Istzeitdaten eines jeden Zielports und Einfügen der gebündelten Daten in eine basierend auf der Zielgrafikvorlage angelegten Portgrafik.

9. Die Methode gemäss Anspruch 1, bei der das voreingestellte Skript übereinstimmend mit einem spezifizierten Zeitzyklus ausgeführt wird, oder das voreingestellte Skript ausgeführt wird, wenn ein Auslösebefehl eintrifft.

10. Eine Vorrichtung für die Kontrolle von Host-Rechnern, die ein Kontrollsystem für den Host-Rechner umfasst, wobei das Kontrollsystem konfiguriert ist, um die Methode gemäss irgendeinem der Ansprüche 1 bis 9 zu implementieren.

11. Eine Vorrichtung für die Kontrolle von Host-Rechnern, die einen Speicher und einen Prozessor umfasst, wobei der Speicher bei Ausführung durch den Prozessor ein vorgegebenes Skript speichert, die Methode gemäss irgendeinem der Ansprüche 1 bis 9 implementiert wird.

## Revendications

1. Une méthode de contrôle d'ordinateurs hôtes, comprenant:
fournir un script prédéfini qui, une fois exécuté, effectue les opérations suivantes:
acquérir l'information de nœud d'un nœud cible et l'information d'ordinateur hôte d'un ordinateur hôte cible dans le nœud cible, où l'information d'ordinateur hôte comprend la marque/le modèle et le port à contrôler;
identifier un gabarit d'ordinateur hôte concordant sur la base d'une série de gabarits d'ordinateurs hôtes préchargés à partir de la marque/modèle de l'ordinateur hôte cible;
appeler un gabarit d'ordinateur hôte concordant avec l'ordinateur hôte cible, et créer une instance de l'ordinateur hôte cible dans un système de contrôle conformément à l'information de l'ordinateur hôte et au gabarit de l'ordinateur hôte;
ajouter l'instance créée à une arborescence de nœuds correspondant à l'information de nœud; où l'arborescence de nœuds affiche le statut contrôlé de chaque ordinateur hôte;
si l'arborescence de nœuds correspondant à l'information de nœud n'existe pas, identifier l'information de l'opérateur de réseau et l'information de localisation géographique incluses dans l'information de nœud; appeler le script pour créer l'arborescence de nœuds et exécuter le script appelé conformément à l'information de nœud pour créer l'arborescence de nœuds correspondant à l'information de nœud;
déterminer un port à contrôler de l'instance créée dans l'arborescence de nœuds sur la base de l'information de l'ordinateur hôte; appeler un gabarit graphique concordant avec le port, et créer un graphique de port correspondant au port de l'instance créée; et rassembler les données en temps réel du port et regrouper les données collectées en temps réel dans le graphique du port.

2. La méthode conformément à la revendication 1, où la création de l'instance de l'ordinateur hôte cible comprend les pas suivants:
déterminer le nom de l'ordinateur hôte correspondant à l'instance créée sur la base de l'information de nœud et l'information de l'ordinateur hôte en utilisant une convention de dénomination spécifique, où le nom de l'ordinateur hôte comprend au moins l'information de région du nœud cible, l'information de l'opérateur de réseau, l'information de la bande passante et l'information d'adresse de communication de l'ordinateur hôte cible.

3. La méthode conformément à la revendication 1, comprenant en outre les pas suivants:
fournir un script pour créer un gabarit d'ordinateur hôte, où, s'il n'existe pas actuellement un gabarit d'ordinateur hôte concordant avec l'ordinateur hôte cible, la méthode comprend en outre les pas suivants:
identifier un modèle d'ordinateur hôte et un port à contrôler inclus dans l'information d'ordinateur hôte, et appeler le script pour créer un gabarit d'ordinateur hôte; et
exécuter le script appelé conformément au modèle d'ordinateur hôte, et créer le gabarit de l'ordinateur hôte concordant avec l'ordinateur hôte cible et marquer un port de l'ordinateur hôte cible à contrôler dans le gabarit de l'ordinateur cible qui a été créé.

4. La méthode conformément à la revendication 1, où l'opération d'ajouter l'instance créée à l'arborescence de nœuds correspondant à l'information de nœud comprend en outre les pas suivants:
identifier un opérateur de réseau et une localisation géographique correspondant à l'ordinateur hôte cible, et ajouter l'instance créée à l'arborescence de nœuds concordante avec l'opérateur de réseau et la localisation géographique identifiés.

5. La méthode conformément à la revendication 1, où la création du graphique du port correspondant au port de l'instance créée comprend en outre les pas suivants:
déterminer un nom de graphique pour le graphique du port créé en utilisant la convention de dénomination concordante avec le type de port.

6. La méthode conformément à la revendication 1, comprenant en outre les pas suivants:
fournir un script pour créer un gabarit graphique, où, s'il n'existe pas actuellement un gabarit graphique concordant avec le port, la méthode comprend en outre les pas suivants:
identifier le type de port du port et appeler le script pour créer un gabarit graphique, et exécuter le script appelé conformément au type de port, et créer le gabarit graphique concordant avec le port.

7. La méthode conformément à la revendication 1, ou, après avoir créé le graphique du port correspondant au port de l'instance créée, la méthode comprend en outre les pas suivants:
déterminer au moins deux ports cibles à combiner à partir d'une série de ports à contrôler, et déterminer si actuellement il y a un gabarit graphique cible concordant avec au moins deux ports cibles à combiner;
si actuellement il existe un gabarit graphique cible concordant avec au moins deux ports cibles à combiner, utiliser le gabarit graphique cible pour créer un graphique de port correspondant à au moins deux ports cibles à combiner; et
si actuellement il n'y a pas de gabarit graphique cible concordant avec au moins deux ports cibles à combiner, appeler un script pour créer un gabarit graphique, et utiliser le script appelé pour créer un gabarit graphique cible concordant sur la base d'une série de ports et de types de ports d'au moins deux ports cibles à combiner.

8. La méthode conformément à la revendication 7, comprenant en outre les pas suivants:
collecter respectivement les données en temps réel de chacun des deux ports cibles à combiner, et réunir les données en temps réel collectées de chaque port cible et rassembler les données réunies dans le graphique du port crée sur la base du gabarit graphique cible.

9. La méthode conformément à la revendication 1, où le script prédéfini est exécuté conformément à un cycle de temps spécifié, ou bien le script prédéfini est exécuté dès la réception d'une instruction de déclenchement.

10. Un dispositif de contrôle d'ordinateurs hôtes, comprenant un système de contrôle d'ordinateurs hôtes, où le système de contrôle est configuré pour mettre en place la méthode conformément à l'une quelconque des revendications 1 à 9.

11. Un dispositif de contrôle d'ordinateurs hôtes, comprenant une mémoire et un processeur, où la mémoire stocke un script prédéfini, lequel, une fois exécuté par le processeur, met en place la méthode conformément à l'une quelconque des revendications 1 à 9.
